# EUROPEAN PATENT SPECIFICATION

(11) **EP 0 993 851 B1**
(45) Date of publication and mention of the grant of the patent: **07.04.2004**
(21) Application number: 99610063.2
(22) Date of filing: 12.10.1999
(51) Int. Cl.: A63H 33/04, F16F 1/12

(54) **A shock absorber for a toy building set**
Stossdämpfer für einen Spielzeugbausatz
Amortisseur pour un jeu de construction

(30) Priority: 14.10.1998 DK 131098
(43) Date of publication of application: 19.04.2000
(73) Proprietor: LEGO A/S, 7190 Billund (DK); Interlego A.G., 6340 Baar (CH)
(72) Inventor: Kroigaard, Olav, 7182 Bredsted (DK)
(74) Representative: Sigh, Erik

(56) References cited:
- EP-A- 0 830 883
- FR-A- 2 463 302
- US-A- 3 603 575
- US-A- 5 056 764
- US-A- 5 427 558

## Description

The present invention relates to toy building sets and in particular to a shock absorber for toy building sets, said shock absorber comprising a substantially rod-shaped element having at its one end a collar and a guide comprising a sleeve which displaceably encloses the rod-shaped element; and wherein the rod-shaped element and the guide each has means for mounting on another construction; and wherein a spring is arranged which, with its one end, abuts on the rod-shaped element and, with its other end, abuts on the sleeve in such a manner that it uses its spring force to displace the above-mentioned sleeve towards the collar on the first mounting element.

Such shock absorbers are often used in toy building sets for the construction of mechanical models, such as vehicles and the like, wherein the shock absorber can be arranged on movable elements of some kind of movable construction in such a manner that a springy movement is obtained. When the shock absorber is used eg in the construction of a model of a vehicle, the shock absorber can serve as a shock absorber for the movable wheel suspension of the vehicle whereby the model thus built will act approximately as a real vehicle.

US patent No 5 056 764 teaches eg a shock absorber arranged in such a manner that it can easily be mounted on another construction in that the guide for the rod-shaped element in combination with the collar on the rod-shaped element make it easy to mount the shock absorber on another construction by shifting a slotted portion of the other construction in between the guide and the collar on the shock absorber.

However, it is a problem with this solution that, although adequate spring function can be obtained, only a limited shock absorption is obtained, since the absorbing effect is generated as a result of the friction between the rod-shaped element and the guide, and this friction has to be limited in such a manner that it is ensured that the shock absorber does not by itself, during use, become unstuck from the other construction on which it is mounted.

US patent No 4 869 704 teaches another configuration of a spring device for a toy building set whereby a substantially increased absorption effect is obtained in addition to the spring function in that a conical helical by itself triggers the springy as well as the shock absorbing effect, the individual coils of the conical helical spring being in frictional abutment on each other.

The shock absorbing and springy conical helical spring according to US patent No 5 056 764 and No 4 869 704, respectively, are arranged in such a manner that the shock absorption and the spring effect are obtained simultaneously.

Moreover, eg US patent Nos 3 603 575 and 4 869 704 feature a plurality of embodiments of shock absorbers and shock absorbing elements, the construction of which being unsuitably for use in toys since they are, firstly, configured with a view to use of a hydraulic fluid to obtain the internal shock absorbing friction, and, secondly, their construction is relatively complex.

In the light of this, it is the object of the present invention to provide a shock absorber for a toy building set of the type described in the introductory part whereby it is possible, on the one hand, by simple means to obtain a substantially increased shock absorbing effect.

According to the present invention this is obtained with a shock absorber of the kind described in the introductory part in that the guide further comprises a substantially air-filled cylinder element with a substantially cylindrical inner wall which is so configured that the collar on the rod-shaped element is arranged in displaceable abutment on the inside of the cylinder element.

In an advantageous embodiment of the invention, the collar is configured as a piston, and the piston in elastic abutment on the inner wall of the air-filled cylinder element. Hereby a friction between the piston and the air-filled cylinder element is obtained which yields an adequate absorbing effect.

According to a further preferred embodiment the means for mounting the rod-shaped part and the guide on another construction comprise respective eyes arranged on each of these whereby it is possible to mount in each of said eyes a shaft end or the like part on another construction.

The cylindrical inner wall on the air-filled cylinder element is particularly advantageously closed at its one end and open at its opposite end. Viz, hereby a shock absorbing effect is obtained when the collar is forcibly shifted in the air-filled cylinder element.

Particularly advantageously, the air-filled cylinder element has, at its open end, means for releasable coupling of the air-filled cylinder element and the sleeve. Viz, it is hereby obtained that the cylinder element and the sleeve with the displaceable rod-shaped element can readily be removed from each other.

According to an alternative, preferred embodiment the air-filled cylinder element and the sleeve are provided with means for snaplocking the sleeve to the air-filled cylinder element which means that the two elements cannot be pulled apart during normal use.

Further advantageously that end of the rod-shaped element opposite the end where the collar is situated comprises a seat for receiving the one end of the spring, and where the other end of the spring abuts on a second seat arranged on the sleeve. Hereby the sleeve with the displaceable rod-shaped element and the spring can be removed from the cylinder element as an integral unit without the spring being dismounted.

In this context, the spring is particularly advantageously a helical spring which is so arranged as to substantially enclose the rod-shaped element.

The above-described separation of the shock absorber is further facilitated by a particularly advantageous embodiment of the invention wherein the means for releasably mounting the air-filled cylinder element on the sleeve is constituted by an abutment surface located at the open end on the air-filled cylinder element and a complementarily configured abutment surface located on said sleeve, and positioning means configured with a view to preventing sideways displacement of the air-filled cylinder element relative to the sleeve. Viz, it is hereby obtained that the cylinder element can be separated from the remaining part of the shock absorber simply by pulling the two elements apart.

Such authentic embodiment of the shock absorber is obtained provided the means for mounting of the rod-shaped element on another construction are arranged on the end of the rod-shaped element which is opposite that end on which the collar is arranged.

In this context, the sleeve is particularly advantageously provided with a through-going opening through which the rod-shaped element can be shifted; and in that the opening has an internal cross sectional dimension that exceeds the cross sectional dimension of the rod-shaped element, measured in the same direction, whereby the rod-shaped element can be shifted substantially without friction in the through-going opening in the sleeve.

Further advantageously, the means for releasable mounting of the guide on another construction are arranged on the cylinder element; and in that the cylinder element has a cylindrical inner wall which is air-tightly closed at the one end, and at the opposite end has an abutment surface for abutment on a corresponding abutment surface configured on the sleeve, whereby the cylinder element and the guide together form a cylindrical space in which the collar can be shifted, and wherein that end of the cylindrical space where the guide is arranged features ventilation passages with a view to ensuring a substantially unimpeded flow of air from the cylindrical space.

According to a preferred embodiment, the piston is configured as a disc in a rubber-elastic material, and said disc has a centrally arranged through-going opening, and the rod-shaped element has an annular recess at its one end, and wherein the disc is mounted on the rod-shaped element in that the annular recess extends through the central opening in the disc. Hereby it is obtained that it is extremely simple to mount that part of the shock absorber that comprises the rod-shaped element, the spring and the sleeve.

A particularly advantageous embodiment is obtained when the annular recess has a given width and when the disc has a thickness which is smaller than the width of the annular recess, whereby the disc is allowed to be displaced in the annular recess longitudinally of the rod-shaped element; and wherein the annular recess is delimited by a first abutment surface that restricts the displacement of the disc in a direction towards the one end of the rod-shaped element, and a second abutment surface that restricts the displacement of the disc in the opposite direction, and wherein each of the two abutment surfaces is provided with a groove that extends from the bottom of the annular recess and to the periphery of the recess on the rod-shaped element. This enables the groove to serve as a throttle passage for the air to be forced past the piston by displacement of the piston in the air-filled cylinder element, and it is hereby ensured by simple measures that an even shock absorbing effect is accomplished, also after a protracted period of use.

If the groove in the first abutment surface has a cross sectional area which is different from the corresponding cross sectional area on the second abutment surface, it is further accomplished that a different throttle area is provided which means that the absorbing effect is different, depending on whether the piston is withdrawn from or inserted into the air-filled cylinder element.

The groove in the first abutment surface can thus advantageously have a cross sectional area which is smaller than the corresponding cross sectional area on the second abutment surface which means that the absorption peaks when the rod-shaped element with the piston is withdrawn from the air-filled cylinder element whereby the absorption completely or partially equalises the spring force so as to obtain that when a given force is exerted, substantially the same resistance to displacement of the piston in the air-filled cylinder element is accomplished.

A preferred embodiment of the invention will now be described with reference to the drawings, wherein:
Figure 1 is a lateral view illustrating a shock absorber according to the invention;
Figure 2 is a blown-up, lateral view illustrating the shock absorber shown in Figure 1;
Figure 3 is a lateral view of a component of the shock absorber illustrated in Figure 2.

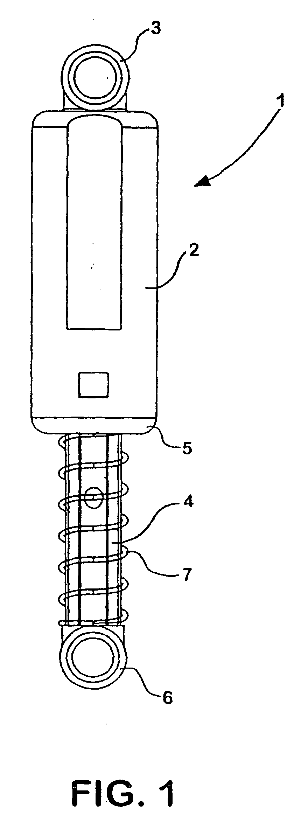

Thus, Figure 1 is a view of a shock absorber 1 according to the present invention, seen in a lateral view. Thus the shock absorber 1 comprises a cylinder element 2 having at its one end an eye 3 for mounting of the shock absorber 1 on another construction, such as a (not shown) shaft end or the like. Since, obviously, the shock absorber can, in this manner, be mounted on any other construction that features such shaft end for receiving the eye 3, this is not exemplified in the figures.

It will also appear from Figure 1 that the shock absorber 1 has a rod-shaped element 4 which is displaceably arranged in a sleeve 5, and wherein the rod-shaped element 4 has, at the end facing away from said sleeve 5, an eye 6 corresponding in principle to the eye 3 on the cylinder element 2, whereby the eyes 3 and 6 can be mounted on shaft ends with substantially identical dimensions.

Around the rod-shaped element 4 a compression spring 7 is arranged that extends between the sleeve 5 and the eye 6 on the rod-shaped element 4, in such a manner that it aims at pressing the sleeve 5 along the rod-shaped element 4 and away from the eye 6 on the rod-shaped element 4.

As will appear, the shock absorber 1 can thus be mounted on another construction, eg between the wheel suspension and the body of a model vehicle whereby the shock absorber 1 will serve, and visually appear as a shock absorber therefor.

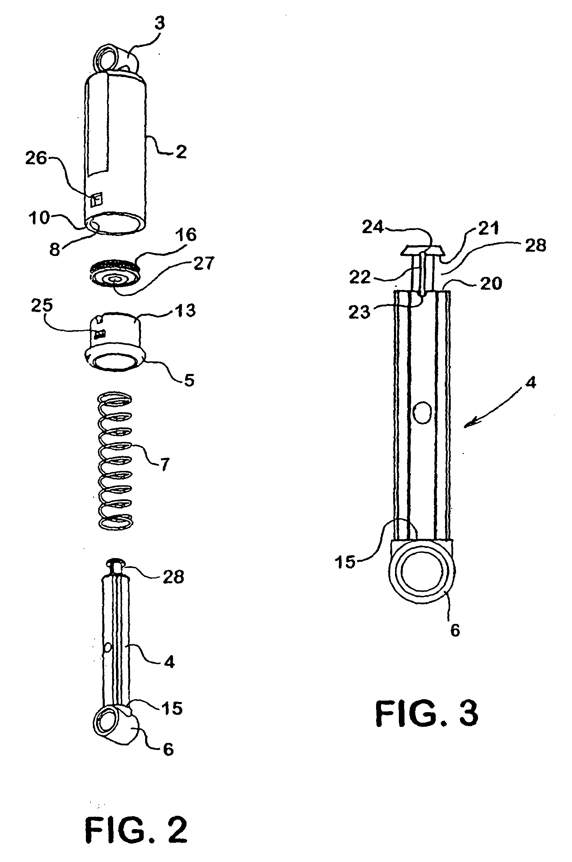

The construction of the shock absorber 1 shown in Figure 1 will be discussed in further detail in the following with reference to Figure 2 which is a blown-up view of the shock absorber shown in Figure 1, seen from the side.

As will appear, the shock absorber comprises the sleeve 5 and the cylinder element 2, and it will appear that the cylinder element 2 has an inner wall which is configured as a circular-symmetrical cylinder surface 8 being at its one end, at the eye 3, closed and having at its other end an abutment surface 10 for abutment on a corresponding abutment surface on the sleeve 5.

Furthermore, the sleeve 5 has an elevation 13 arranged on the abutment surface which is complementary relative to the abutment surface 10 on the cylinder element 2. The elevation extends a distance into the cylinder element 2 which prevents the sleeve from being displaced sideways relative to the cylinder element 2, and on the elevation 13, studs 25 are arranged that are intended for engaging recesses 26 on the cylinder element during mounting of the sleeve 5 on the cylinder element, whereby the two elements are interlocked. Additionally, the sleeve has an opening which displaceably encloses the rod-shaped element 4 and forms a guide therefor. The opening is preferably configured to allow the rod-shaped element to be displaced therein substantially without friction.

Moreover, the sleeve 5 has an abutment surface for supporting the helical spring 7, and the rod-shaped element 4 extending within the helical spring 7 and having an abutment surface 15 at the eye 6, the spring will thus, following mounting of the shock absorber, extend between the eye 6 and the sleeve 5 and thereby press the sleeve 5 in a direction towards the piston 16, said piston 16 being mounted in the annular recess 28 on the rod-shaped element by means of a centrally arranged, through-going opening 27 in the piston 16.

Herein the piston 16 is made of a relatively elastic material which allows it to abut on the rotationally symmetrical cylinder surface 8 with a suitable friction.

It is thus found that the rod-shaped element 4 along with the piston 16 can be pressed into the cylinder element 2, and since, on the one side, the piston abuts on the rotationally symmetrical cylinder surface 8 on the cylinder element 2, and since the air that is enclosed in the cylinder element 2 on the top surface of the piston 16 is compressed and forced out at the periphery of the piston 16, adequate absorption effect is hereby accomplished.

Since friction occurs substantially exclusively between the piston 16 and the rotationally symmetrical cylinder surface 8, the sleeve 5 will effectively be maintained in abutment on the cylinder element 2 by the spring force of the spring 7, whereby the sleeve and the cylinder element serve as a permanently integral unit unless the entire piston 16 is completely withdrawn from the cylinder element 2.

This effect is further ensured in that the space delimited between the piston 16 and the sleeve is configured with passages for the discharge of the air that is compressed in this space when the rod-shaped element 4 is partially withdrawn from the cylinder element 2. In the embodiment shown, this passage is in the form of a free space between the rod-shaped element 4 and the opening 17.

Now, Figure 3 will show the rod-shaped element 4 in an enlarged, lateral view, wherein said rod-shaped element is, in a preferred embodiment, provided with an annular recess 28 for receiving the disc-shaped piston 16 shown in Figure 2. This recess is delimited by a first abutment surface 21 that prevents the not shown piston 16 from being displaced in a direction away from the eye 6, and a second abutment surface 20 that prevents the piston 16 from being displaced in a direction towards the eye 6 on the rod-shaped element 4.

In a preferred embodiment, the piston 16 is configured such that its thickness is less than the distance between the two abutment surfaces 20 and 21 that delimit the annular recess 28, which allows the piston 16 to be displaced a short distance forwards and backwards in the annular recess 28 whereby the piston, in its one position, abuts on the abutment surface 21 that is farthest from the eye 6 on the rod-shaped element 4 and, in its other position, is in abutment on the opposed abutment surface 20.

Viz, it is hereby possible in a simple manner to obtain a throttle effect in dependence on the position of the piston 16 in that a passage 22 is arranged at the bottom of the recess, said passage 22 being in communication with a first passage 24 situated in the one abutment surface 21, and a second passage 23 arranged in the opposed abutment surface 20, and in that the two passages 23,24 that are arranged in the abutment surfaces 20,21 have different cross sectional dimension, a throttling is accomplished of the air that flows through the passages 22,23,24, said throttling being dependent on the position of the piston 16.

If, in use, the piston 16 is thus withdrawn from the cylinder element 2, the passage 24 will constitute the smallest throttling cross section and when, in use, the piston 16 is moved in the opposite direction, it will be the passage 23 that constitutes the smallest throttling cross section, which means that the shock absorption performance differs depending on the direction of movement of the piston.

In this context, the passage 24 arranged on the abutment surface 21 which is farthest from the eye 6 preferably has the smallest flow cross section whereby a relatively high degree of shock absorption of the movement of the piston 16 out of the cylinder element 2 is accomplished, which means that the influence of the spring 7 is hereby balanced to a desired degree.

Obviously, the embodiment shown is exclusively an examplary preferred embodiment of the present invention. However, the person skilled in the art will know how to realise other embodiments while using the same inventive principle. Thus, cylinder surfaces with different cross sectional dimensions can be used, such as square and other cross sections. As regards the location of the eyes 3,6, this may be varied as well without departing from the principle of the invention, and it is not a prerequisite that air has to be enclosed between the piston 16 and the cylinder element 2. Thus, passages can be arranged in that portion of the cylinder element 2 which is situated above the piston 16 or within the piston proper, whereby air is allowed to escape more readily when the piston 16 is pushed into the cylinder element 2. These degrees of freedom can be used with a view to adapting the shock absorbing performance of the shock absorber 1. Alternatively the friction between the piston 16 can be minimised and optionally completely eliminated if air is evacuated from the above-mentioned space above the piston 16 only at a certain resistance.

Furthermore, it is obvious from a design point of view that there are ample options for the person skilled in the art to adapt the design to the relevant toy building set and the relevant purpose which makes it possible to provide a spring device with associated shock absorbing performance and that visually corresponds to actual machine components.

As regards materials, the embodiment shown is extremely suitable for manufacture in plastics, all components being so configured that core pullings are possible in an injection moulding process, and most components being to a very high degree rotationally symmetrical.

## Claims

1. A shock absorber for a toy building set, said shock absorber comprising a substantially rod-shaped element that has, at its one end, a collar and a guide that comprises a sleeve that displaceably encloses the rod-shaped element, and wherein the rod-shaped element and the guide each comprises means for mounting on another construction, and wherein a spring is arranged that is, with its one end, in abutment on the rod-shaped element and, with its other end, in abutment on the sleeve in such a manner that it uses its spring force to displace said sleeve towards the collar, **characterized in that** the guide further comprises a substantially air-filled cylinder element having a substantially cylindrical inner surface which is so configured that the collar on the rod-shaped element is in displaceable abutment on the inner wall of the cylinder element.

2. A shock absorber according to claim 1, **characterized in that** the collar is configured as a piston; and **in that** the piston is in elastic abutment on the inner wall of the air-filled cylinder element.

3. A shock absorber according to claim 1 or 2, **characterized in that** the means for mounting the rod-shaped element and the guide on another construction comprise an eye arranged on each of these.

4. A shock absorber according to any one of the preceding claims, **characterized in that** the cylindrical inner wall of the air-filled cylinder element is closed at its one end, and at its other end, it is open.

5. A shock absorber according to claim 4, **characterized in that** the sleeve is so configured that it covers the open end of the air-filled cylinder element; and **in that** the open end of the air-filled cylinder element has means for releasably interconnecting said air-filled cylinder element and the sleeve.

6. A shock absorber according to any one of the preceding claims, **characterized in that** the end of the rod-shaped element which is opposite the end on which the collar is situated is provided with a seat for receiving the one end of the spring; and wherein the opposite end of the spring is in abutment on another seat arranged on the sleeve.

7. A shock absorber according to any one of the preceding claims, **characterized in that** the spring is a helical spring which is so arranged that it substantially encloses the rod-shaped element.

8. A shock absorber according to one of claims 5 through 7, **characterized in that** the means for releasably mounting the air-filled cylinder element on the sleeve are in the form of an abutment surface located at the open end of the air-filled cylinder element; and a complementarily configured abutment surface located on the sleeve; and positioning means that are configured with a view to preventing the air-filled cylinder element from being shifted sideways relative to the sleeve.

9. A shock absorber according to claim 8, **characterized in that** the air-filled cylinder element and the sleeve are provided with means for snap-locking the sleeve to the air-filled cylinder element.

10. A shock absorber according to claim 8 or 9, **characterized in that** the sleeve is provided with a through-going opening through which the rod-shaped element can be displaced; and **in that** the opening has an internal cross sectional dimension which exceeds the cross sectional dimension of the rod-shaped element, measured in the same direction, in such a manner that the rod-shaped element can be displaced substantially without friction in the through-going opening of the sleeve.

11. A shock absorber according to any one of the preceding claims, **characterized in that** the means for mounting the first mounting element on another construction are mounted on the end of the rod-shaped element of the first mounting element which is opposite that end on which the collar is located.

12. A shock absorber according to any one of the preceding claims, **characterized in that** the cylinder element has a cylindrical inner wall which is air-tightly closed at the one end, and at the opposite end has an abutment surface for abutment on a corresponding abutment surface arranged on the sleeve, whereby the cylinder element and the collar together form a cylindrical space in which the collar can be displaced; and wherein, at the end of the cylindrical space where the sleeve is located, ventilation passages are arranged with a view to ensuring a substantially unimpeded discharge of air from the cylindrical space.

13. A shock absorber according to claim 2, **characterized in that** the piston is configured as a disc of a rubber-elastic material, and said disc having a centrally arranged, through-going opening, and that the rod-shaped element has an annular recess arranged at its one end, and wherein the disc is mounted on the rod-shaped element by the annular recess extending through the central opening in the disc.

14. A shock absorber according to claim 13, **characterized in that** the annular recess has a given width; and that the disc has a thickness which is smaller than the width of the annular recess, whereby the disc is able to be displaced in the annular recess longitudinally of the rod-shaped element; and wherein the annular recess is delimited by a first abutment surface that restricts the displacement of the disc in a direction towards the one end of the rod-shaped element, and a second abutment surface that restricts displacement of the disc in the opposite direction; and wherein each of the two abutment surfaces is provided with a groove that extends from the bottom of the annular recess and to the outer periphery of the recess on the rod-shaped element.

15. A shock absorber according to claim 14, **characterized in that** the groove in the first abutment surface has a cross sectional area which is different from the corresponding cross sectional area on the second abutment surface.

16. A shock absorber according to claim 14, **characterized in that** the groove in the first abutment surface has a cross sectional area which is smaller than the corresponding cross sectional area on the second abutment surface.

## Revendications

1. Amortisseur de chocs pour ensemble de construction de jouet, ledit amortisseur de chocs comprenant un élément sensiblement en forme de tige qui a, à sa première extrémité, un anneau et un guide qui comprend un manchon qui entoure en pouvant changer de place l'élément en forme de tige, et dans lequel l'élément en forme de tige et le guide comprennent l'un et l'autre des moyens pour le montage sur une autre construction, et dans lequel est disposé un ressort qui vient, avec sa première extrémité, en butée sur l'élément en forme de tige et, avec son autre extrémité en butée sur le manchon de telle manière qu'il utilise sa force élastique pour déplacer ledit manchon en direction de l'anneau, **caractérisé en ce que** le guide comprend de plus un élément sensiblement cylindrique rempli d'air ayant une surface interne sensiblement cylindrique qui est configuré pour que l'anneau sur l'élément en forme de tige vienne en butée en pouvant changer de place sur la paroi intérieure de l'élément cylindrique.

2. Amortisseur de chocs selon la revendication 1, **caractérisé en ce que** l'anneau est configuré comme un piston ; et **en ce que** le piston vient en butée élastique sur la paroi intérieure de l'élément cylindrique rempli d'air.

3. Amortisseur de chocs selon la revendication 1 ou 2, **caractérisé en que** les moyens pour le montage de l'élément en forme de tige et du guide sur une autre construction comprennent un oeillet placé sur chacun de ceux-ci.

4. Amortisseur de chocs selon l'une quelconque des revendications précédentes, **caractérisé en ce que** la paroi intérieure cylindrique de l'élément cylindrique rempli d'air est fermée à sa première extrémité et, est ouverte, à son autre extrémité.

5. Amortisseur de chocs selon la revendication 4, **caractérisé en ce que** le manchon est configuré pour qu'il couvre l'extrémité ouverte de l'élément cylindrique rempli d'air ; et **en ce que** l'extrémité ouverte de l'élément cylindrique rempli d'air a des moyens pour interconnecter de façon détachable ledit élément cylindrique rempli d'air et le manchon.

6. Amortisseur de chocs selon l'une quelconque des revendications précédentes, **caractérisé en ce que** l'extrémité de l'élément en forme de tige qui est opposée à l'extrémité sur laquelle est situé l'anneau est munie d'une surface d'appui pour accueillir la première extrémité du ressort ; et dans lequel l'extrémité opposée du ressort vient en butée sur une autre surface d'appui disposée sur le manchon.

7. Amortisseur de chocs selon l'une quelconque des revendications précédentes, **caractérisé en ce que** le ressort est un ressort hélicoïdal qui est disposé pour qu'il entoure sensiblement l'élément en forme de tige.

8. Amortisseur de chocs selon l'une quelconque des revendications 5 à 7, **caractérisé en ce que** les moyens pour monter de manière détachable l'élément cylindrique rempli d'air sur le manchon sont de la forme d'une surface de butée placée à l'extrémité ouverte de l'élément cylindrique rempli d'air ; et d'une surface de butée configurée de façon complémentaire placée sur le manchon, et par des moyens de positionnement qui sont configurés dans la perspective d'éviter au cylindre rempli d'air d'être décalé latéralement par rapport au manchon.

9. Amortisseur de chocs selon la revendication 8, **caractérisé en ce que** l'élément cylindrique rempli d'air et le manchon sont munis de moyens d'accrochage rapide du manchon sur l'élément cylindrique rempli d'air.

10. Amortisseur de chocs selon la revendication 8 ou 9, **caractérisé en ce que** le manchon est muni d'une ouverture qui le traverse à travers laquelle peut se déplacer l'élément en forme de tige ; et **en ce que** l'ouverture a une dimension de coupe transversale interne qui dépasse la dimension de coupe transversale de l'élément en forme de tige mesurée dans le même sens, de manière à ce que l'élément en forme de tige puisse se déplacer totalement sans frottement dans l'ouverture du manchon.

11. Amortisseur de chocs selon l'une quelconque des revendications précédentes, **caractérisé en ce que** les moyens de montage du premier élément de montage sur une autre construction sont montés sur l'extrémité de l'élément en forme de tige du premier élément de montage qui est opposée à l'extrémité sur laquelle est disposé l'anneau.

12. Amortisseur de chocs selon l'une quelconque des revendications précédentes, **caractérisé en ce que** l'élément cylindrique a une paroi intérieure cylindrique qui est hermétiquement close à la première extrémité, et à l'extrémité opposée a une surface de butée pour venir buter sur une surface de butée correspondante disposée sur le manchon, ce qui fait que l'élément cylindrique et l'anneau forment ensemble un espace cylindrique dans lequel l'anneau peut se déplacer; et dans lequel, à l'extrémité de l'espace cylindrique où est placé le manchon, des passages de ventilation sont agencés dans la perspective d'assurer une décharge d'air totalement libre à partir de l'espace cylindrique.

13. Amortisseur de chocs selon la revendication 2, **caractérisé en ce que** le piston est configuré comme un disque de matériau élastique en caoutchouc, et ledit disque ayant une ouverture qui le traverse, placée au centre et **en ce que** l'élément en forme de tige a une cavité annulaire placée à sa première extrémité, et dans lequel le disque est monté sur l'élément en forme de tige grâce à la cavité annulaire passant à travers l'ouverture centrale du disque.

14. Amortisseur de chocs selon la revendication 13, **caractérisé en ce que** la cavité annulaire a une largeur donnée ; et **en ce que** le disque a une épaisseur qui est plus petite que la largeur de la cavité annulaire, ce qui fait que le disque peut se déplacer dans la cavité annulaire longitudinalement à l'élément en forme de tige ; et dans lequel la cavité annulaire est délimitée par une première surface de butée qui restreint le déplacement du disque dans un sens vers la première extrémité de l'élément en forme de tige, et une deuxième surface de butée qui restreint le déplacement du disque dans la direction opposée ; et dans lequel chacune des deux surfaces de butée est munie d'une rainure qui s'étend entre le fond de la cavité annulaire et la périphérie extérieure de la cavité sur l'élément en forme de tige.

15. Amortisseur de chocs selon la revendication 14, **caractérisé en ce que** la rainure dans la première surface de butée a une zone de coupe transversale qui est différente de la zone de coupe transversale correspondante sur la deuxième surface de butée.

16. Amortisseur de chocs selon la revendication 14, **caractérisé en ce que** la rainure dans la première surface de butée a une zone de coupe transversale qui est plus petite que la zone de coupe transversale correspondante sur la deuxième surface de butée.

## Patentansprüche

1. Stoßdämpfer für einen Spielzeugbausatz, wobei der Stoßdämpfer ein im wesentlichen stabförmiges Element aufweist, das an seinem einen Ende einen Bund und eine Führung aufweist, die eine Hülse umfasst, welche das stabförmige Element verschiebbar umschließt, und wobei das stabförmige Element und die Führung jeweils Mittel zum Anbringen an einem anderen Aufbau aufweisen, und wobei eine Feder vorgesehen ist, die mit ihrem einen Ende in Anlage an dem stabförmigen Element ist und mit ihrem anderen Ende in Anlage an der Hülse in solcher Weise ist, dass sie ihre Federkraft zum Verschieben der Hülse in Richtung auf den Bund verwendet, **dadurch gekennzeichnet, dass** die Führung ferner ein im wesentlichen luftgefülltes Zylinderelement mit einer im wesentlichen zylindrischen Innenfläche aufweist, die so ausgelegt ist, dass der Bund an dem stabförmigen Element in verschiebbarer Anlage an der Innenwand des Zylinderelements ist.

2. Stoßdämpfer nach Anspruch 1, **dadurch gekennzeichnet, dass** der Bund als ein Kolben ausgelegt ist; und dass der Kolben in elastischer Anlage an der Innenwand des luftgefüllten Zylinderelements ist.

3. Stoßdämpfer nach Anspruch 1 oder 2, **dadurch gekennzeichnet, dass** die Mittel zum Anbringen des stabförmigen Elements und der Führung an einem anderen Aufbau ein Auge aufweisen, das an jedem derselben vorgesehen ist.

4. Stoßdämpfer nach einem der vorhergehenden Ansprüche, **dadurch gekennzeichnet, dass** die zylindrische Innenwand des luftgefüllten Zylinderelements an ihrem einen Ende geschlossen ist und an ihrem anderen Ende offen ist.

5. Stoßdämpfer nach Anspruch 4, **dadurch gekennzeichnet, dass** die Hülse so ausgelegt ist, dass sie das offene Ende des luftgefüllten Zylinderelements bedeckt; und dass das offene Ende des luftgefüllten Zylinderelements Mittel zum lösbaren Verbinden des luftgefüllten Zylinderelements und der Hülse miteinander aufweist.

6. Stoßdämpfer nach einem der vorhergehenden Ansprüche, **dadurch gekennzeichnet, dass** das Ende des stabförmigen Elements, das dem Ende entgegengesetzt ist, an dem sich der Bund befindet, mit einem Sitz zum Aufnehmen des einen Endes der Feder versehen ist; wobei das entgegengesetzte Ende der Feder in Anlage auf einem anderen an der Hülse angeordneten Sitz ist.

7. Stoßdämpfer nach einem der vorhergehenden Ansprüche, **dadurch gekennzeichnet, dass** die Feder eine Spiralfeder ist, die so angeordnet ist, dass sie im wesentlichen das stabförmige Element umschließt.

8. Stoßdämpfer nach einem der Ansprüche 5 bis 7, **dadurch gekennzeichnet, dass** die Mittel zum lösbaren Anbringen des luftgefüllten Zylinderelements an der Hülse in Form einer Anlagefläche, die sich an dem offenen Ende des luftgefüllten Zylinderelements befindet; und einer komplementär ausgelegten Anlagefläche, die an der Hülse angeordnet ist; und Positionierungsmitteln vorliegen, die zu dem Zweck ausgelegt sind, eine Verschiebung des luftgefüllten Zylinderelements zur Seite in bezug zur Hülse zu verhindern.

9. Stoßdämpfer nach Anspruch 8, **dadurch gekennzeichnet, dass** das luftgefüllte Zylinderelement und die Hülse mit Mitteln zum Einschnappen der Hülse an dem luftgefüllten Zylinderelement versehen sind.

10. Stoßdämpfer nach Anspruch 8 oder 9, **dadurch gekennzeichnet, dass** die Hülse mit einer Durchgangsöffnung versehen ist, durch die das stabförmige Element verschoben werden kann; und dass die Öffnung eine innere Querschnittsabmessung aufweist, die die Querschnittsabmessung des stabförmigen Elements gemessen in der selben Richtung in solcher Weise übersteigt, dass das stabförmige Element im wesentlichen ohne Reibung in der Durchgangsöffnung der Hülse verschoben werden kann.

11. Stoßdämpfer nach einem der vorhergehenden Ansprüche, **dadurch gekennzeichnet, dass** die Mittel zum Anbringen des ersten Einbauelements an einem anderen Aufbau an dem Ende des stabförmigen Elements des ersten Einbauelements angebracht sind, welches dem Ende gegenüberliegt, an dem sich der Bund befindet.

12. Stoßdämpfer nach einem der vorhergehenden Ansprüche, **dadurch gekennzeichnet, dass** das Zylinderelement eine zylindrische Innenwand aufweist, welche luftdicht an einem Ende geschlossen ist, und an dem entgegengesetzten Ende eine Anlagefläche für Anlage an einer entsprechenden, an der Hülse vorgesehenen Anlagefläche aufweist, wodurch das Zylinderelement und der Bund zusammen einen zylindrischen Raum bilden, in dem der Bund verschoben werden kann; und bei dem an dem Ende des zylindrischen Raums, wo sich die Hülse befindet, Lüftungsdurchgänge zu dem Zweck angeordnet sind, ein im wesentlichen unbehindertes Ablassen von Luft aus dem zylindrischen Raum sicherzustellen.

13. Stoßdämpfer nach Anspruch 2, **dadurch gekennzeichnet, dass** der Kolben als eine Scheibe aus einem gummielastischen Material ausgelegt ist, und die Scheibe eine mittig angeordnete Durchgangsöffnung aufweist, und dass das stabförmige Element eine Ringausnehmung aufweist, die an seinem einen Ende angeordnet ist, und wobei die Scheibe an dem stabförmigen Element durch die Ringausnehmung angebracht wird, die sich durch die mittige Öffnung in der Scheibe erstreckt.

14. Stoßdämpfer nach Anspruch 13, **dadurch gekennzeichnet, dass** die Ringausnehmung eine gegebene Breite hat; und dass die Scheibe eine Dicke aufweist, die kleiner als die Breite der Ringausnehmung ist, wodurch die Scheibe in der Ringausnehmung in Längsrichtung des stabförmigen Elements verschoben werden kann; und wobei die Ringausnehmung durch eine erste Anlagefläche, die die Verschiebung der Scheibe in eine Richtung zu dem einen Ende des stabförmigen Elements hin begrenzt, und eine zweite Anlagefläche begrenzt wird, die Verschiebung der Schiebe in die entgegengesetzte Richtung begrenzt; und wobei jede der beiden Anlageflächen mit einer Nut versehen ist, die sich von dem Boden der Ringausnehmung zu dem äußeren Umfang der Ausnehmung an dem stabförmigen Element erstreckt.

15. Stoßdämpfer nach Anspruch 14, **dadurch gekennzeichnet, dass** die Nut in der ersten Anlagefläche eine Querschnittsfläche aufweist, die sich von der entsprechenden Querschnittsfläche an der zweiten Anlagefläche unterscheidet.

16. Stoßdämpfer nach Anspruch 14, **dadurch gekennzeichnet, dass** die Nut in der ersten Anlagefläche eine Querschnittsfläche aufweist, die kleiner als die entsprechende Querschnittsfläche an der zweiten Anlagefläche ist.
